# FASCICULE DE BREVET EUROPEEN

(11) **EP 2 135 902 B1**
(45) Date de publication et mention de la délivrance du brevet: **02.11.2011**
(21) Numéro de dépôt: 09305558.0
(22) Date de dépôt: 17.06.2009
(51) Int. Cl.: C09D 133/00, C09D 7/12, E01F 9/04

(54) **Produits de marquage routier à propriétés photocatalytiques, autonettoyantes et à surface hyperhydrophile renouvelable**
Produkte zur Straßenmarkierung mit fotokatalytischen, selbstreinigenden Eigenschaften und einer hyperhydrophilen erneuerbaren Oberfläche
Road marking products with photocatalytic properties, self-cleaning and with a renewable hyperabsorbent surface

(30) Priorité: 20.06.2008 FR 0854110
(43) Date de publication de la demande: 23.12.2009
(73) Titulaire: COLAS, 92100 Boulogne-Billancourt (FR)
(72) Inventeur: Bricout, Xavier, 78960 Voisins le Bretonneux (FR)
(74) Mandataire: Michelet, Alain

(56) Documents cités:
- EP-A- 1 559 753
- WO-A-99/20701
- US-A- 4 058 641

## Description

L'invention concerne une composition de marquage routier et un produit de marquage routier comprenant outre ladite composition, des billes de verre et/ou des matériaux antidérapants. La composition de marquage routier présente des propriétés photocatalytiques qui lui confèrent, une fois appliquée sur un support, des caractéristiques particulières telles que des propriétés autonettoyantes et une surface hyperhydrophile renouvelable. L'invention concerne également l'utilisation de dioxyde de titane sous forme anatase dans une composition ou produit de marquage routier à surface hyperhydrophile renouvelable.

Un produit de marquage routier, qu'il soit horizontal voire vertical, est soumis de par sa fonction aux conditions climatiques locales telles que les variations de température, l'exposition aux ultraviolets (UV) et aux pollutions (pluie, poussières organiques et minérales). Cela a pour conséquence une perte progressive de ses propriétés essentielles qui sont la visibilité de jour caractérisée par la luminance (O_{D}), la visibilité de nuit caractérisée par la rétroréflexion (R_{L}) et l'adhérence du marquage caractérisée par l'antiglissance (SRT).

L'encrassement a une influence néfaste sur la colorimétrie du produit de marquage entrainant une perte de la perception de l'information pour le conducteur ou l'utilisateur. En effet, cet encrassement, lorsqu'il se dépose sur la bille de verre et surtout dans les interstices entre les billes de verre et/ou entre les matériaux antidérapants, est « bloqué » et masque en partie la surface des billes. Cela conduit par conséquent à une diminution importante de la visibilité du marquage et tout particulièrement à une perte de rétroréflexion détrimentaire pour le conducteur.

En outre, l'encrassement et l'abrasion en général lié au trafic routier provoquent un polissage de la surface du produit de marquage entraînant une diminution très importante du coefficient d'antiglissance, avec des conséquences certaines sur la sécurité des utilisateurs, qu'ils soient motocyclistes, ou piétons en particulier.

Les compositions de marquage routier comprennent traditionnellement un liant, des pigments, des charges et des additifs. L'utilisation de dioxyde de titane en tant que pigment dans les peintures routières est connue. Le dioxyde de titane existe sous plusieurs formes allotropiques dont les plus connues sont le rutile, l'anatase et la brookite. Le dioxyde de titane sous forme rutile et anatase possédent une activité photocatalytique. Toutefois, la forme anatase est beaucoup plus active que la forme rutile.

L'effet photocatalytique peut être défini de la façon suivante. Le dioxyde de titane (TiO₂) est un oxyde semi-conducteur connu pour ses propriétés photocatalytiques. En effet, des paires "électron - trou" sont photo-générées lorsque ce matériau est soumis à un rayonnement de longueur d'onde inférieure à 400 nm donc suite à une irradiation naturelle (soleil) ou artificielle (lampe).

Ces paires "électron - trou" réagissent avec l'oxygène, l'humidité de l'air ambiant et les groupements hydroxyles ou produits organiques adsorbés à la surface du dioxyde de titane pour donner des radicaux notamment des radicaux superoxydes et hydroxyles très oxydants. La photocatalyse permet donc de décomposer des molécules organiques à la surface du dioxyde de titane, grâce à la formation de radicaux qui amorceront une rupture des liaisons covalentes. Le dioxyde de titane cristallisé sous forme anatase, de par son activité photocatalytique, catalyse l'oxydation des composés organiques.

Les propriétés photocatalytiques du dioxyde de titane ont été exploitées dans diverses applications. La majorité des études sur la photocatalyse du TiO₂ porte sur la minéralisation des gaz d'échappement et le traitement de l'air ou de l'eau.

Le brevet WO 97/07069 décrit également un verre autonettoyant réalisé par l'application d'un film de revêtement optiquement clair et résistant à l'abrasion à base d'un photocatalyseur qui peut être du dioxyde de titane sous forme anatase. Suite à une exposition à l'air et à la lumière, le film, grâce à ses propriétés photocatalytiques, empêche les salissures et contaminations d'adhérer au verre.

Le brevet FR 2 824 846 divulgue un substrat comprenant sur une de ses fasces un revêtement à propriétés photocatalytiques contenant de l'oxyde de titane cristallisé sous forme anatase, dans un liant essentiellement minéral comprenant au moins un oxyde métallique semi-conducteur. Les substrats décrits dans ce document sont de manière générale tous matériaux utilisés dans la construction et tout particulièrement des vitrages. Les revêtements permettent ainsi de conférer aux matériaux qu'ils recouvrent des propriétés anti-salissures, fongicides, bactéricides, éventuellement combinées à des propriétés hydrophiles, anti-buée et optiques.

Il existe également des peintures comprenant des composés photocatalytiques mais ces revêtements qu'ils soient développés comme produit dépolluant en extérieur voire même en intérieur cherchent en général par tous moyens à éviter la photodégradation du liant. Ces peintures comprennent des liants minéraux de type silicone et non des liants à base de produit organique afin d'éviter que le liant ne soit lui-même dégradé par photocatalyse.

La demande de brevet FR 2 326 461 divulgue des compositions de marquage routier pouvant comprendre à titre de pigment un mélange de dioxyde de titane sous forme anatase et rutile. Toutefois, tous les exemples de composition comprenant du dioxyde de titane sous forme anatase sont en phase solvant et comprennent à titre de liant une résine alkyde glycérophtalique et éventuellement des paraffines et caoutchouc chlorés. En outre, ce document ne montre aucun intérêt d'utiliser plus particulièrement du dioxyde de titane sous forme anatase. Celui-ci n'est absolument pas utilisé pour ces propriétés photocatalytiques et donc a fortiori dans l'objectif d'obtenir un produit de marquage routier possédant une surface autonettoyante, hyperhydrophile et renouvelable.

Le document US 4 058 641 divulgue des produits de marquage routier présentant une meilleure durabilité due à l'utilisation d'une couche d'accrochage particulière. Ce document ne s'intéresse absolument pas aux propriétés photocatalytiques du dioxyde de titane anatase. En outre, les compositions de marquage décrites dans ce document comprennent plus de 40% en poids de liant organique.

Le document WO 99/20701 divulgue quant à lui des compositions pour marquage thermoplastique. Ces compositions comprennent un liant de type polyoléfine et des charges inorganiques. Le dioxyde de titane est cité parmi les charges. Ce document ne s'intéresse pas non plus aux propriétés photocatalytiques du dioxyde de titane anatase. Les compositions du document D2 qui comprennent du dioxyde de titane anatase comportent moins de 10% de pigments.

Le document EP 1 559 753 divulgue des peintures anti-bactériennes à base de silicate de potassium et contenant du dioxyde de titane sous forme anatase. Cette peinture photocatalytique est conçue pour un usage dans des bâtiments résidentiels et publics, et contient un mélange de dioxyde de titane sous forme anatase. Il est bien précisé que cette peinture comprend majoritairement un liant de type minéral afin que la peinture ne se détériore pas avec le temps. Il est précisé que l'addition de dioxyde de titane n'est pas réalisable dans des peintures traditionnelles, c'est-à-dire à base de liant organique car il provoque la détérioration de ces liants. Le terme « mélange de dioxyde de titane » signifie, dans ce document que le dioxyde de titane est présent sous la forme d'un mélange ayant une distribution granulométrique particulière et notamment une surface spécifique élevée. Le terme « mélange » ne se rapporte pas à un mélange de dioxyde de titane anatase et rutile. Les compositions de ce document comportent au maximum 6% de liant organique. Il ne s'agit donc pas d'une peinture comprenant principalement un liant organique.

Le demandeur a découvert de façon surprenante que l'utilisation de dioxyde de titane cristallisé sous forme anatase dans un produit de marquage routier comprenant un liant de nature organique, permet d'obtenir une excellente tenue dans le temps des propriétés d'antiglissance, de visibilité de jour et de nuit. Selon l'invention, les compositions et produits de marquage routier présentent une susceptibilité faible à la salissure et des propriétés de surface auto-renouvelables.

Prise dans son premier aspect, la présente invention a donc pour objet une composition de marquage routier comprenant en poids par rapport au poids total de la composition :
- 10 à 40 % d'un liant de base organique comprenant une résine choisie parmi les homopolymères ou copolymères obtenus à partir de monomères vinyliques, acryliques ou méthacryliques, les résines naturelles ou synthétiques solubles dans l'alcool ou dans les huiles éventuellement modifiées, notamment les résines de dérivés végétaux, les cellulosiques, les résines de pétrole et les résines de coumarone-indène, les polyurées, les polyesters et polyéthers, les résines aminoplastes (aminées), les phénoplastes (phénoliques), et les ester-époxydiques, à l'exception des résines alkydes,
- 10 à 40 % de pigments, dont 1 à 100 % de la teneur totale en pigment est du dioxyde de titane cristallisé sous forme anatase et
- ou moins 20 % de charges.

L'invention concerne également un produit de marquage routier comprenant la composition de marquage routier et des microbilles et/ou des matériaux antidérapants.

L'invention concerne également l'utilisation de dioxyde de titane sous forme anatase pour fabriquer un produit de marquage routier comprenant un liant de nature organique, qui possède des propriétés de surface hyperhydrophiles et renouvelables.

Les mécanismes sous-tendant l'invention reposent sur deux propriétés du dioxyde de titane cristallisé sous forme anatase. D'une part celui-ci permet la dégradation photocatalytique du liant constituant le produit de marquage routier. D'autre part, il rend la surface hyperhydrophile.

En effet, le dioxyde de titane possède des propriétés hyperhydrophiles lorsqu'il est exposé à un rayonnement UV. Le caractère hydrophile d'un matériau se mesure grâce à l'angle de mouillage, c'est-à-dire l'angle que fait une goutte d'eau avec la surface du matériau. Lorsque que le dioxyde de titane est soumis à un rayonnement UV, cet angle diminue jusqu'à étalement total de la goutte. La surface devient alors hyperhydrophile et il n'y a pas de retenue d'eau.

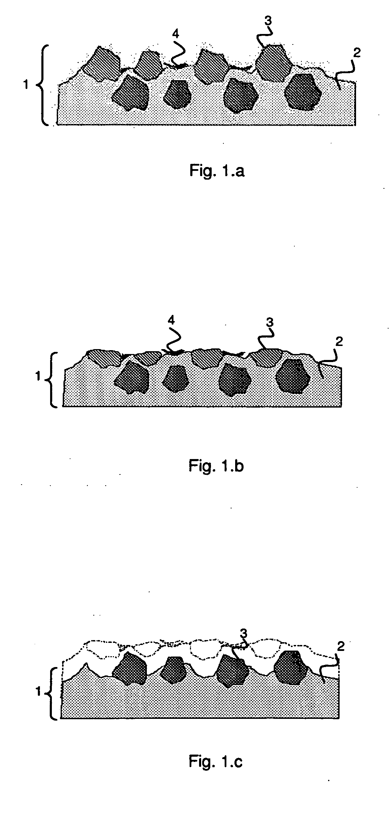

Classiquement, un produit de marquage présente en surface des matériaux antidérapants et/ou des billes de verre qui lui confèrent de propriétés d'antiglissance élevées (SRT initial élevé). La figure 1.a illustre un produit de marquage routier 1, comportant une composition de marquage routier 2 et des matériaux antidérapants 3 faisant saillie à la surface du produit de marquage routier. La présence de billes de verre ou de matériaux antidérapants a pour inconvénient de retenir les salissures 4 car elles sont « bloquées » entre les interstices des matériaux antidérapants faisant saillie en surface. Les salissures s'accumulent à la surface et ne peuvent pas être éliminées par le trafic.

Dans le cas d'un produit de marquage routier conventionnel, après une certaine usure liée au trafic, un phénomène de polissage apparaît. Ce phénomène est illustré sur la figure 1.b. Les propriétés d'antiglissance ont tendance à diminuer.

Selon l'invention, suite à une exposition aux UV, le liant organique compris dans la composition de marquage se dégrade en surface du produit de marquage au contact du dioxyde de titane sous forme anatase et entraîne le décollement des salissures. En parallèle, la surface étant hyperhydrophile, l'eau s'étale bien en surface du marquage routier et notamment se glisse entre la surface dégradée du liant et la salissure. Ce phénomène favorise l'évacuation des salissures de nature diverse et du liant dégradé. En effet, l'action combinée de la pluie et du trafic, permet le décollement et l'évacuation de l'ensemble liant dégradé / salissure.

En outre, suite à l'élimination de la couche supérieure de liant, les particules en surface ne sont plus retenues et peuvent être arrachées avant qu'elles ne soient polies par le trafic. On renouvelle donc ainsi l'état de surface du produit de marquage routier et par conséquent ses propriétés d'antiglissance. Ce phénomène est illustré sur la figure 1.c. L'invention permet non seulement de nettoyer la surface mais en plus de maintenir de bonne performance en terme d'antiglissance.

Contrairement aux applications connues mettant en oeuvre du dioxyde de titane sous forme anatase visant uniquement la dégradation des polluants, l'invention vise non seulement la dégradation des salissures mais également la dégradation du liant en surface. En effet, les salissures peuvent être de nature organique ou minérale mais surtout leur taille est telle que leur dégradation prendrait des mois, voire des années. En dégradant le liant en surface, on permet le décollement et donc l'élimination de tout type de salissure peu importe leur nature ou leur taille, mais également l'arrachage des particules en surface prévenant ainsi leur polissage. Cette technique présente donc l'avantage surprenant de renouveler les propriétés de surface du produit de marquage routier et tout particulièrement l'antiglissance (SRT).

Le produit de marquage routier selon l'invention conserve donc une surface présentant un coefficient de luminance, une rétroréfection et une antiglissance élévés au cours du temps.

Le coefficient de luminance (Q_{d}) sous éclairage diffus définit la visibilité de jour d'un marquage tel qu'il est perçu par un usager à une distance de 30 mètres. Ce coefficient traduit la blancheur du marquage. Il est définit selon la norme NF EN 1436. La mesure est exprimée en millicandelas par lux par mètre carré (mcd/Lux/m²)_{.}

La rétroréflexion (R_{L}) de nuit par temps sec, humide ou sous la pluie, définit la visibilité de nuit du marquage tel qu'il est perçu par un conducteur, à une distance de 30 mètres, sous l'éclairage des feux de son véhicule. Il est définit selon la norme NF EN 1436. La mesure est exprimée en millicandelas par lux par mètre carré (mcd/Lux/m²).

L'antiglissance SRT définit la valeur de l'adhérence d'un marquage sur la chaussée. Il est définit selon la norme NF EN 1436.

La composition de marquage routier selon l'invention présente en outre les caractéristiques suivantes seules ou en combinaison :
- le dioxyde de titane cristallisé sous forme anatase représente en poids, par rapport au poids total de pigment, 2 à 75%, de préférence 10 à 40% et mieux encore 20 à 30%,
- la composition comprend un mélange de dioxyde de titane cristallisé sous forme anatase et de dioxyde de titane cristallisé sous forme rutile,
- les proportions en poids de dioxyde de titane cristallisé sous forme rutile par rapport au poids total de la composition sont comprises entre 1 et 40%, de préférence entre 5 et 22 %, et mieux encore entre 9 et 18 %,
- la composition comprend en poids par rapport au poids total de la composition 1 à 6 %, de préférence 2 à 5 % et mieux encore 3,5 % à 4,5 % de dioxyde de titane sous forme anatase,
- le liant de base organique se trouve sans solvant (si il est thermoplastique), en phase aqueuse ou en phase solvant organique, de préférence en phase aqueuse,
- la composition peut comporter outre les solvants apportés par le liant de base organique, un ou plusieurs solvants pouvant être différents ou identiques à ceux du liant de base organique,
- le liant de base organique en phase aqueuse est une émulsion comprenant 30 à 70 % d'extrait sec,
- le liant de base organique est de préférence une émulsion d'au moins un polymère acrylique,
- lorsque la composition est en phase aqueuse, elle comporte moins de 10% en poids de solvant de nature organique, de préférence moins de 5% en poids par rapport au poids total de la composition,
- lorsque la composition est en phase solvant, les proportions de solvants en poids par rapport au poids total de la composition sont comprises entre 10 à 50%,
- lorsque la composition est sans solvant, les proportions de liant sont comprises entre 5 et 30%
- les charges sont choisies parmi le carbonate de calcium, la silice amorphe ou cristallisée, les fibres ou les laminaires (charges sous forme de lamelles type talc),
- la composition comprend en poids par rapport au poids total:
   - 30 à 40 % de liant de base organique,
   - 10 à 20 % de pigments,
   - 35 à 45 % de charges,
- le taux de charge total représentant les proportions en poids totales de charges et de pigments par rapport au poids total de la composition, est supérieur ou égale à 50%, de préférence compris entre 50% et 60 %,
- la teneur en solide, en poids par rapport au poids total de la composition est supérieure à 60%, et de préférence comprise entre 70 et 80 %,
- la composition comprend en outre un ou plusieurs additifs choisis parmi les agents de coalescence, les agents antimousses, les épaississants, les surfactants et les dispersants,
- la composition comprend 0 à 4 % en poids d'additifs par rapport au poids total de la composition, de préférence 1 à 4% en poids.

L'invention concerne également l'utilisation de dioxyde de titane sous forme anatase dans une composition de marquage routier ou un produit de marquage routier comprenant un liant de nature organique, pour conférer à la composition ou au produit de marquage des propriétés de surface hyperhydrophiles et renouvelables.

La teneur en solide au sens de l'invention correspond au poids sec total de pigments, charges et de liant. Si des additifs sont présents, leur poids n'est pas inclus pour calculer le poids sec total.

Le dioxyde de titane cristallisé sous forme anatase présente des caractéristiques de maintien en blancheur dans le temps importantes de par ces propriétés photocatalytiques. On utilise de préférence du dioxyde de titane sous forme anatase ayant une surface spécifique (BET) supérieure à 250 m²/g. Ce type de produit est accessible dans le commerce. On peut notamment citer le TiO₂ anatase Hombikat® UV100 de la société Sachtleben, ou le P25® de Degussa.

La composition selon l'invention comporte de préférence un ou plusieurs pigments autres que le dioxyde de titane sous forme anatase. Ces pigments peuvent être de nature minérale ou organique et de préférence de granulométrie très fine (généralement < 1 µm). De par l'application visée, les pigments les plus recherchés sont les pigments blanc et jaune.

Parmi les pigments minéraux conférant la couleur blanche, on peut citer les autres formes allotropiques du dioxyde de titane et plus particulièrement le dioxyde de titane (TiO₂) rutile. Le dioxyde de titane rutile, est disponible dans le commerce notamment sous la dénomination Tioxyde® TR92 ou TIPURE® R902.

On peut également citer à titre de pigments minéraux blancs le lithopone (BaSO₄, ZnS), et l'oxyde de zinc.

Parmi les pigments minéraux conférant la couleur jaune, on peut citer le jaune bismuth/vanadate (BiOV), le jaune titanate chrome/antimoine, le jaune titanate nickel/antimoine, l'oxyde de fer, le jaune de zinc, le jaune de chrome, le chromate de plomb, le jaune de cadmium.

Parmi les pigments organiques existant, les composés les plus utilisés sont les suivants : les dérivés de phtalocyanine, les dérivés azoïques (dérivés de benzidine, toluidine, dinitraniline), les pigments isoindoline ou isoindolinone, les pigments à base de di-keto-pyrrolopyrrole, les dérivés d'anthraquinone, de pérylène ou de thioindigo, les pigments de quinacridone, les pigments de dioxazine. A titre de pigment organique de couleur jaune, on peut citer le benzimidazolone, les quinazolinediones, les quinoxalinediones, l'arylamide, et leurs dérivés.

Le liant de base organique selon l'invention comprend une résine choisie parmi les homopolymères ou copolymères obtenus à partir de monomères vinyliques, acryliques ou méthacryliques, les résines naturelles ou synthétiques solubles dans l'alcool ou dans les huiles éventuellement modifiées, notamment les résines de dérivés végétaux, les cellulosiques, les résines de pétrole et les résines de coumarone-indène, les polyurées, les polyesters et polyéthers, les résines aminoplastes (aminées), phénoplastes (phénoliques), et les ester-époxydiques, à l'exception des résines alkydes.

Les résines convenant à l'invention sont des produits parfaitement connus. Ces produits sont d'ailleurs répertoriés dans la norme AFNOR NF T 36-005 qui a pour objet d'établir une classification des peintures, des vernis et des produits connexes.

Les résines alkydes précisément exclues par la présente invention correspondent dans la classification NF T 36-005 à la famille 1, classe 4. Ces résines sont obtenues par estérification de polyalcools (glycérine, pentaérythritol) par des diacides phtaliques (anhydride phtalique, acides isophtalique, téréphtalique) et modifiées par des acides gras insaturés ou des huiles. Les principaux acides gras employés dans la synthèse sont issus d'huiles siccatives ou semi-siccative. Ces résines sont appelées résine glycérophtalique.

Les résines vinyliques, acryliques, méthacryliques ou copolymères convenant à l'invention correspondent dans la classification NF T 36-005 à la famille 1, classe 7. Ces résines sont par exemples décrites dans le brevet US 6,689,824 et la demande de brevet WO 01/60929. A titre de résine vinylique, acrylique ou méthacrylique, on peut citer les polyacrylates ou polyméthacrylates de méthyle ou d'éthyle, l'acétate de polyvinyle en solution dans un mélange solvant. A titre de résine à base d'un copolymère ou terpolymère vinylique, acrylique ou méthacrylique, on peut citer le styrène / acrylique, acétate de vinyle / acrylique, éthylène / vinyl acétate, chlorure de vinyle / acétate ou propionate de vinyle/ acrylate, acétate de vinyle / versatate de vinyle, acétate de vinyle / maléate de vinyle, acrylique époxydique et acrylique/aminoplaste.

Les résines naturelles ou synthétiques solubles dans l'alcool ou dans les huiles éventuellement modifiées convenant à l'invention correspondent dans la classification NF T 36-005 à la famille 1, classe 10a. Cette classe englobe les gommes, laques dures ou tendres, résines copals et colophanes. On utilise de préférence les résines de dérivés végétaux telles que les colophanes éventuellement modifiées (estérifiées, maléisées, hydrogénées etc.). Ces résines peuvent être utilisées avec des huiles, de préférence d'origine végétale. On utilise de préférence un mélange de résine de colophane et d'huile végétale.

Les résines cellulosiques convenant à l'invention correspondent dans la classification NF T 36-005 à la famille 1, classe 5. Les résines cellulosiques comprennent les nitrocellulosiques, l'acétate de cellulose, l'acétobutyrate de cellulose ; les éthers et esters de cellulose. Ces résines peuvent être associées à d'autres liants tels que des résines aminées, vinyliques, acryliques, maléiques, abiétophénoliques, des esters de la colophane, des gommes naturelles, des polyuréthannes, des polyesters.

Les résines de pétrole (résines hydrocarbonées) et les résines de coumarone-indène convenant à l'invention correspondent dans la classification NF T 36-005 à la famille 1, classe 10h. Ces résines sont en général des résines préparées à partir de fractions d'hydrocarbures provenant du craquage à la vapeur de naphta, tel que des coupes aromatiques contenant des monomères choisi parmi le styrène et ses dérivés, les vinyltoluènes et l'allylbenzène et/ou des coupes aliphatiques contenant un monomère ayant de 5 à 6 atomes de carbone tel que le cyclopentadiène et ses dérivés et le cyclohexadiène. A titre d'exemple, on peut citer les résines hydrocarbonées commercialisées sous la référence ESCOREZ^{™} par la société Exxon Chem très utilisées dans les produits de marquage à chaud.

Les résines aminoplastes (aminées), phénoplastes (phénoliques), et ester-époxydique convenant à l'invention correspondent respectivement dans la classification NF T 36-005 à la famille 1, classe 10d, 10e, 10g. Les résines aminées les plus courantes sont obtenues par polycondensation d'aldéhyde formique (formol) et d'urée ou de mélamine. Ces résines phénoliques sont obtenues par polycondensation d'aldéhyde formique et de phénols

Les polyesters et polyéthers convenant à l'invention correspondent dans la classification NF T 36-005 à la famille 1, classe 6. Cette classe regroupe les polyuréthannes (classe 6a), les polyépoxydes (classe 6b), les polyesters saturés (classe 5c) et les polyesters insaturés (classe 6d).

Les polyuréthannes sont formés par réaction entre un polyisocyanate et un composé hydroxylé qui peut être un polyalcool, un polyester, une résine acrylique ou, plus rarement, l'humidité atmosphérique.

Les résines époxydiques se forment par réaction de l'épichlorhydrine avec un composé hydroxylé (bisphénol A, F ou mélange des deux), additionné d'un durcisseur. Le durcisseur est un produit capable de réagir, soit avec l'épichlorhydrine, soit avec le bisphénol. Dans le premier cas, les durcisseurs utilisés sont des polyamines (par exemple le 4,4'-diaminodiphénylméthane), des acides (par exemple l'acide hexahydrophtalique), des anhydrides, des novolaques. (résines phénoliques thermoplastiques), des polyamides ou des polyaminoamides. Dans le second cas, le durcisseur est soit un acide organique, soit un polyisocyanate. On peut citer à titre d'exemple les résines époxy-polyamine, époxy-polyamide, époxy-polyuréthanne, époxy-urée-formol, époxy-mélanine-formol.

Parmi les polyesters, on distingue les polyesters saturés et les polyesters insaturés. Les polyesters insaturés dérivent de la réaction d'un diacide sur un dialcool. Le composé obtenu, à structure linéaire, est mis en solution dans un monomère vinylique copolymérisable, habituellement du styrène. Le mélange est durci par addition d'un catalyseur. Les polyesters saturés, appelés parfois improprement alkydes sans huile, sont obtenus par estérification de polyalcools par un mélange d'anhydride phtalique et d'un diacide aliphatique ou un diacide aromatique.

Les compositions selon l'invention peuvent être en phase solvant ou en phase aqueuse voire sans solvant dans le cas des compositions thermoplastiques. On utilise de préférence des compositions en phase aqueuse comprenant des liants se trouvant en phase aqueuse.

Au sens de l'invention, les compositions en phase solvant contiennent essentiellement des solvants organiques pour la mise en solution (ou en dispersion) des liants qui les constituent. Les solvants sont par exemple choisis parmi l'acétate de butyle ou d'éthyle, les cétones, le toluène, le xylène, l'éthanol, le propanol, les solvants issus des ressources renouvelables d'origine végétale ou animale tels que le Vegeflux® et le bioéthanol.

Au sens de l'invention, les compositions en phase aqueuse contiennent un mélange d'eau et de solvant (ci-après appelé « partie liquide »). On considère qu'une composition est en phase aqueuse si elle contient au moins 60% en poids d'eau par rapport au poids total de la partie liquide de la composition. On préfère utiliser une composition comprenant moins de 30%, de préférence moins de 20% de solvant organique par rapport au poids total de la partie liquide de la composition. On préfère également une composition comprenant moins de 10 %, de préférence moins de 5 % en poids de solvant organique par rapport au poids total de la composition. En utilisant préférentiellement ce type de composition, c'est-à-dire en utilisant moins de composés organiques volatils qui s'évaporent lors du séchage, on réduit considérablement les impacts sur l'air mais aussi sur l'eau ou le sol.

Selon un mode de réalisation préférentiel, on utilise une composition en phase aqueuse et de préférence une composition comprenant un liant de type émulsion acrylique en phase aqueuse. Lorsque le liant est une émulsion en phase aqueuse, sa teneur en eau est comprise entre 30 et 70% en poids par rapport au poids total du liant.

Le liant de base organique comporte donc le liant organique proprement dit ou résine et un solvant pouvant être de l'eau. Par conséquent, les compositions de l'invention comprennent 5 à 20 % en poids de résine organique.

Les charges permettent d'adapter certaines caractéristiques mécaniques, chimiques, électriques ou rhéologiques. On utilise de préférence des charges d'origine minérale. Les charges les plus utilisées sont les sulfates, les silicates, les carbonates tels que le carbonate de calcium (CaCO₃) et la dolomie (CaCO₃, MgCO₃), les oxydes tels que la silice (SiO₂) amorphe ou cristallisée. On peut également utiliser à titre de charge des laminaires ou des fibres.

Les compositions de marquage selon l'invention peuvent être utilisées pour fabriquer différents produits de marquage tels qu'une peinture routière aqueuse ou solvantée, un enduit à froid ou à chaud, une bande préformée.

De préférence, un produit de marquage routier de type peinture routière ou enduit à chaud ou à froid, comprend outre ladite composition, des billes de verre et/ou des matériaux antidérapants.

Les compositions de marquage selon l'invention sont mélangées et maintenues en un état approprié d'agitation avant d'être déposées sur la route en utilisant par exemple une machine d'application équipée de pulvérisateur et de distributeur.

Par exemple, une peinture en phase aqueuse ou en phase solvant est appliquée liquide ou immédiatement après application (état frais) à raison de 200 à 1000 g/m².

Une fois la composition pulvérisée sur la surface, les billes réfléchissantes et/ou matériaux antidérapants peuvent être immédiatement dispersés sur la composition, de façon à ce que ces matériaux soient partiellement noyés dans la composition. Un équipement commercial usuel d'application comporte une tête de pulvérisation pour la composition et en association, un dispositif de distribution de billes de verre, qui est synchronisé avec la tête de pulvérisation pour distribuer les billes de verre sur le marquage fraîchement appliqué.

Les billes de verre ou rétro-réfléchissantes ont un indice de réfraction de 1,50 à 2,4, les plus utilisées ont un indice de 1,52 et sont issues de verre recyclé. La granulométrie va de 100 à 1400 voire 2000 µm étagée selon les normes EN 1423/1424. La quantité saupoudrée varie entre 50 et 800 g/m² suivant l'effet, la taille et l'épaisseur de produit de marquage.

Les matériaux antidérapants utilisés en saupoudrage doivent présenter une dureté supérieure à 4 Mohs. Ces matériaux sont choisis parmi la silice, les grains de verre, le corindon et la bauxite...

Dans un autre mode de réalisation, on mélange les billes de verre et/ou les matériaux antidérapants avec la composition avant son application sur la surface. On nomme ce procédé « pré-mélange ou prémix».

Les matériaux anti-dérapants lorsqu'ils sont incorporés en prémix sont considérés comme de la charge "classique", à savoir compris dans les proportions de 20 à 60%. Les billes réfléchissantes incorporées en prémix sont de faible taille et sont présentes de préférence à raison de 10 à 50 %.

Les compositions selon l'invention peuvent comprendre en outre un ou plusieurs additifs conventionnels choisis parmi les agents anti-mousses, les dispersants, les coalescents, les épaississants et les surfactants. Les proportions en poids d'additifs par rapport au poids total de la composition de marquage routier sont de préférence comprises entre 0 et 4 %.

Les enduits à froid sont de préférence utilisés dans les zones urbaines à fort trafic, pour fabriquer des éléments urbains tel que des passages piétons, flèches rabattement, damiers, ou des produits structurés tels que des barrettes, gouttelettes VNTP ( Visibilité de Nuit par Temps de Pluie).

Les enduits à froid sont de préférence à base de résines méthacryliques bicomposantes ou de résines aqueuses monocomposantes.

Les enduits à froid à base de résines méthacryliques bicomposantes chargées comprennent, en poids par rapport au poids total d'enduit :
- 20 % de résine(s) et de plastifiant,
- 50 % pigment(s) et de charges,
- 30 % de billes de verre.

Les enduits à froid à base de résines monocomposantes aqueuses chargées comprennent, en poids par rapport au poids total d'enduit :
- 25 à 35 % de liant,
- 10 à 20 % de pigment(s),
- 40 à 70 % de charges,
- 0 à 3 % de cosolvants,
- 0 à 3 % d'additifs divers.

Les enduits à chaud sont des produits thermoplastiques solides à température ambiante, dont la température bille anneau (TBA) est comprise de préférence de 70 à 100°C. Ces produits sont appliqués entre 160 et 220°C par pulvérisation ou écoulement au travers d'une fente (techniques appelées dans le jargon « rideau » ou « sabot »).

Les enduits à chaud comprennent de préférence des résines hydrocarbonées et/ou d'origine végétales, des pigments, des charges, des billes de verre, des plastifiants, des cires et des agents anti-sédimentation.

On utilise de préférence les enduits à chaud sur autoroutes et zones à très fort trafic.

Les bandes préformés ou bande de marquage sont des bandes prête à l'emploi, généralement autocollante ou thermocollante. Ces bandes comprennent un film PU (polyuréthanne) qui contient des billes de céramique, de verre et des pigments et des charges, posé sur un adhésif sensible à la pression.

Le terme « épaississant » englobe de manière générale toute substance qui ajouté à la peinture modifie son comportement rhéologique. A titre d'épaississant convenant selon l'invention, on peut citer les épaississants naturels, et en particulier choisis parmi les gommes naturelles, les CMC (Carboxyméthylcelluloses) et les HEC (Hydroxyéthylcelluloses), ou choisis parmi les épaississants synthétiques, et en particulier choisis parmi les gommes synthétiques, les épaississants acryliques de type HASE (Emulsions modifiées hydrophobiquement et épaississantes en milieu alcalin ou Hydrophobically modified Alkali-swellable Emulsions) ou ASE (Emulsions épaississantes en milieu alcalin ou Alkali Soluble Emulsions), les épaississant uréthanes modifié hydrophobiquement (HEUR), polyéthers, polyesters, alcool polyvinylique (PVA) ou à base de PVP (polyvinylpyrrolidone), ou d'autres épaississants tels que la fumée de silice, l'argile d'attapulgite et d'autres types d'argile, les agents chélatants. On peut notamment citer les épaississant uréthanes modifié hydrophobiquement commercialisés sous le nom ACRYSOL® RM-825, ACRYSOL® RM-8W, ACRYSOL® RM-12W.

Les dispersants appropriés selon l'invention incluent les dispersants non ioniques, anioniques, et cationiques tels que le 2-amino 2-méthyl 1-propanol (AMP), le diméthyl amino éthanol (DMAE), le tripolyphosphate de potassium (KTPP), le polyphosphate trisodique (TSPP), l'acide citrique et d'autres acides carboxyliques. Les polymères anioniques tels que les homopolymères et copolymères à base d'acides polycarboxyliques, par exemple, l'acide polyacrylique ou l'acide polyméthacrylique ou l'anhydride maléique modifié par des divers monomères tels que le styrène, les esters d'acrylate ou de méthacrylate, le diisobutylène, et d'autres comonomères hydrophiles ou hydrophobes. En outre, sont aussi inclus les sels des polymères mentionnés ci-dessus, ainsi que leurs mélanges. On peut notamment citer le dispersant acrylique commercialisé par la société COATEX sous le nom de COATEX® P90.

Les anti-mousses appropriés incluent les anti-mousses à base d'huile silicone et à base d'huile minérale. Il existe également des formulations à base d'hydrocarbure et d'agents surface non ioniques tels que les produits commercialisés sous le nom FOAMASTER®.

Les coalescents appropriés incluent les éthers de glycol tels que l'éthylène glycol, le propylène glycol, le 2,2,4-trimethyl-1,3-pentanediol monoisobutyrate (TEXANOL^{™}).

Les agents tensio-actifs appropriés sont choisis parmi les agents tensio-actifs cationiques, anioniques, et non ioniques traditionnellement utilisés dans la formulation de peinture. On utilise de préférence un agent tensioactif nonionique notamment un éther du polyéthylène glycol et d'un mélange d'alcool gras tel que le produit TERGITOL®.

Les exemples suivants illustrent les compositions de la présente invention. Toutes les proportions indiquées sont en poids.

### Exemples

### 1. Matières premières

| | | | |
|---|---|---|---|
| Liant organique : | | Emulsion acrylique (extrait sec 50 %) Fastrack® 2706 commercialisée par la société Rhom and Haas, | |
| Pigments : | Dioxyde de titane sous forme anatase : Hombikat® UV100 (100% anatase, surface spécifique (BET) : > 300 m²/g) ; | | |
| Dioxyde de titane rutile : | | TIPURE® R902 commercialisé par la société Dupont, | |
| Charges : | Carbonate de calcium, Durcal® 5 de la société OMYA, | | |
| Additifs : | Agent de coalescence : | Texanol® | |
| | Antimousse : | Foamaster® 8034 | |
| | Epaississant : | Acrysol® RM12W, | |
| | Surfactant : | Tergitol® 15S40, | |
| | Dispersant acrylique : | Coatex® P90. | |

### II. Influence des proportions de TiO₂ anatase sur la viscosité

Cet essai a pour objectif d'évaluer l'influence des proportions de TiO₂ anatase fortement photocatalytique sur les propriétés de la composition de marquage routier. Des compositions comprenant des teneurs différentes en TiO₂ anatase et rutile ont été préparées. Le TiO₂ anatase a une plus grande prise d'huile que le TiO₂ rutile. Lorsque les proportions en TiO₂ anatase augmente, le taux de charge (poids total de charges et de pigments) diminue.

Afin d'évaluer l'influence des proportions de TiO₂ la composition témoin suivante a été réalisée :
- Liant acrylique en phase aqueuse : 35 %
- TiO₂ rutile : 17,98 %
- Charges : 39 %
- Eau : 2,5 %
- Cosolvant : 4,2 %
- Additifs: 1,32 %

Puis, on a réalisé les compositions 1 à 4 en faisant varier les proportions de titane anatase, de titane rutile et de charge. On a mesuré la viscosité à l'aide d'un viscosimètre Brookfield (mobile n°4, vitesse 10 rpm, température produit 21°C, 1 jour après fabrication).

Les résines sont préparées par mélange des différents constituants dans l'ordre suivant :
- ajout de la résine,
- puis si les composés suivants sont utilisés ajout de l'antimousse, puis du surfactant, puis du dispersant,
- ajout des pigments,
- ajout des charges,
- puis éventuellement du ou des solvants et enfin du coalescent.

Ces peintures aqueuses routières sont destinées à être pulvérisées sans air (airless) sur machine.

Le tableau 1 reprend les différentes compositions réalisées ainsi que la viscosité obtenues pour chaque composition.

**Tableau 1 : Variation de la viscosité en fonction des proportions de TiO₂ anatase**

| Formule | Composition témoin | Composition 1 | Composition 2 | Composition 3 | Composition comparative 4 |
|---|---|---|---|---|---|
| % TiO₂ rutile | 17,98 | 13,49 | 8,99 | 4,50 | 0 |
| % TiO₂ anatase | 0 | 2,46 | 4,93 | 7.39 | 9.85 |
| Taux charge | 57,01 | 55,82 | 54,62 | 53,43 | 52,24 |
| Viscosité brookfield (mPa.s) | 2300 | 2630 | 4000 | 4600 | > 14 000 |

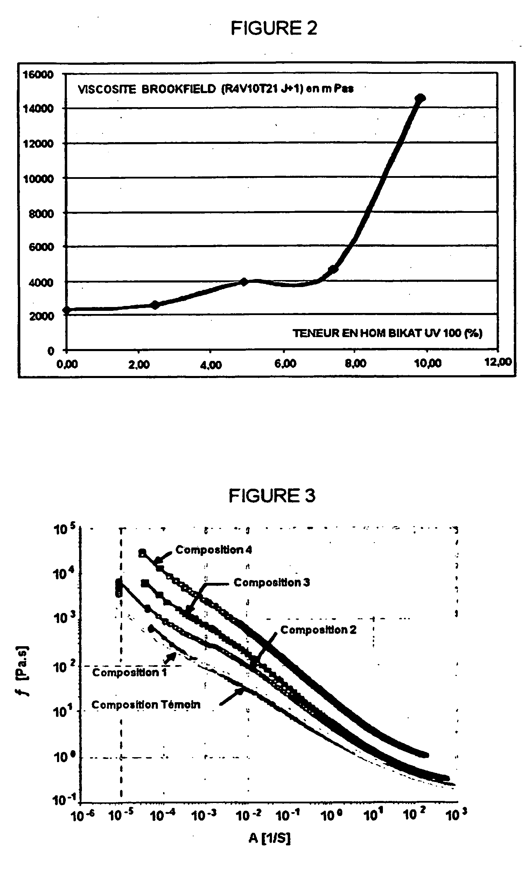

Le tableau 1 et la figure 2 qui représentent l'évolution de la viscosité en fonction de teneur en dioxyde de titane sous forme anatase, montrent que la composition de marquage routier présente une viscosité optimale pour des proportions en TiO₂ anatase inférieures à 6 % en poids par rapport au poids total de la composition, au mieux inférieures à 5 % en poids par rapport au poids total de la composition, ce qui correspond à une teneur de 35% en poids de titane anatase par rapport au poids total de pigment.

L'évolution de la viscosité a également été mesurée à l'aide d'un rhéogramme. Le rhéogramme mesure de l'évolution de la viscosité (en mPa.s) en fonction du gradient de cisaillement (en s⁻¹) sur un rhéomètre avec un mobile cone/plan à contrainte imposée type Rhéostress 600 de la société thermo Electron. Le gradient varient de 10⁻⁴ à 10³ s⁻¹, ce qui permet d'estimer le comportement de la peinture durant sa durée de vie : au stockage, lors du transport, du mélange, sa pulvérisation et son tendu une fois posée au sol.

Le rhéogramme mesuré représenté sur la figure 3 confirme l'évolution générale de viscosité quelque soit le gradient de cisaillement. On constate qu'un mélange comprenant 2,5% en poids de TiO₂ anatase par rapport au poids total de la composition a un rhéogramme identique à une composition comprenant uniquement du dioxyde de titane rutile. Ceci correspond à une composition comprenant 15 % en poids de titane anatase par rapport au poids total de pigment.

### III. Influence des proportions de TiO₂ anatase sur le pouvoir couvrant

### A. Mesure du pouvoir couvrant sur carte Leneta Form 24B

Cette mesure est conforme à la norme NFT 30075. La carte Leneta 24B posséde dés bandes présentant un gradient allant de blanc (note 0) à noir (note 6). La mesure consiste à appliquer différentes épaisseurs contrôlées de peinture puis de mesurer à partir de quelle bande (notée de 1 à 6) on distingue le contraste. 6 correspond à un pouvoir couvrant parfait, 3 est considéré arbitrairement comme le minimum pour pouvoir être utilisé en tant que peinture.

**Tableau 2 : Influence des proportions de TiO₂ anatase sur le pouvoir couvrant**

| Epaisseur frais (µm) | Composition témoin | Composition 1 | Composition 2 | Composition 3 | Composition 4 |
|---|---|---|---|---|---|
| 225 | 5 | 4 | 3 | 2 | 1 |
| 250 | 5 | 4 | 3 | 2 | 1 |
| 275 | 5 | 5 | 3 | 2 | 1 |
| 300 | 5 | 5 | 4 | 3 | 1 |
| 350 | 6 | 5 | 4 | 3 | 1 |
| 400 | 6 | 6 | 5 | 3 | 1 |

Le dioxyde de titane sous forme anatase utilisé présente une granulométrie nanométrique qui peut avoir une influence sur le pouvoir couvrant et par la même sur la rétroréflexion. L'influence de la taille nanométrique du TiO₂ anatase porte en fait sur la capacité d'extendeur du TiO₂ rutile car il va tendre vers l'espacement des particules de TiO₂ rutile, ce qui va permettre d'apporter une meilleures dispersion de celui-ci dans la matrice. De par sa taille nanométrique, le TiO₂ anatase présente un faible pouvoir opacifiant : il est translucide à la lumière. C'est pourquoi on ne peut l'utiliser sans la présence de TiO₂ rutile, lequel est plus gros et présente un haut indice de réfraction.

Le tableau ci-dessus met clairement en évidence que la composition présente un bon pouvoir couvrant même en couche mince pour des proportions en TiO₂ anatase inférieures ou égales à 5%.

A partir de 5% de dioxyde de titane sous forme anatase et donc d'une teneur en charge de 54,62%, le pouvoir couvrant de la composition est insuffisant en couche mince (300 µm soit environ 500 g/m²). La composition comparative 4 comprenant uniquement du TiO₂ anatase ne présente pas un excellent pouvoir couvrant.

### B. Mesure du pouvoir couvrant sur une carte contraste Leneta 2A

On mesure le ratio de luminance (Y) sur un fond blanc (YB) par rapport à noir (YN). Plus ce ratio est supérieur ou égal à 1 et plus le couvrant est important.

Cette mesure est réalisée selon la norme EN 1436. Le principe est le même que celui exposé ci-dessus, si ce n'est que la mesure se fait entre un fond noir et un fond blanc pour une épaisseur donnée et que la mesure se fait avec un spectrocolorimètre en mesurant les paramètres Y et les tristimuli x et y.

**Tableau 3 : Influence des proportions de TiO₂ anatase sur le pouvoir couvrant**

| Couvrant 250 µm frais | Composition témoin | Composition 1 | Composition 2 | Composition 3 | Composition comparative 4 |
|---|---|---|---|---|---|
| YB | 88,37 | 88,28 | 86,14 | 86,08 | 80,58 |
| YN | 88,41 | 87,17 | 87,05 | 82,27 | 71,97 |
| YN/YB | 1,005 | 0,987 | 1,011 | 0,956 | 0,893 |

Ainsi, on constate que le pouvoir couvrant diminue fortement pour des compositions comprenant plus de 5 % de dioxyde de titane sous forme anatase en couche mince (250 µm).

### IV. Influence sur la dureté du film

La mesure de la dureté de Persoz consiste à mesurer le temps d'amortissement d'un pendule reposant, par l'intermédiaire de deux billes d'acier, sur le feuil à étudier. La dureté est exprimée en secondes, ce qui correspond au nombre d'oscillations du pendule lorsque celui-ci est incliné de 12° par rapport à la normale au départ et de 4° ce qui correspond à la fin du test (norme NFT 30-016).

Les essais ont été réalisés sur des films de 400 µm. Les mesures ont été réalisées 1 jour et 6 jours après séchage à température ambiante au laboratoire, ainsi qu'après vieillissement WOM (Weather-O-meter).

Le WOM est un essai de vieillissement accéléré selon la norme NFT 30-049, avec une lampe à Xénon et intégrant une succession de cycles incluant pluie, chaleur humide, chaleur sèche, gel/dégel, ensoleillement. 5 jours de cycles représente 1,5 an de vieillissement naturel en extérieur à Paris.

**Tableau 4 : Influence des proportions de TiO₂ anatase sur la dureté**

| Dureté Persoz (s) 400 µm frais | Composition témoin | Composition 1 | Composition 2 | Composition 3 | Composition comparative 4 |
|---|---|---|---|---|---|
| J+1 | 26 | 29 | 33 | 39 | 42 |
| J+6 | | 28 31 | 34 | 40 | 43 |
| Aprés WOM 5j | 41 | 49 | 68 | 77 | 97 |

On constate une variation importante de la dureté Persoz des films en fonction des proportions de dioxyde de titane sous forme anatase surtout après vieillissement accéléré. L'augmentation des proportions de TiO₂ anatase dans les compositions tend à augmenter la dureté des films alors même que la teneur en charge diminue. Comme observé dans les mesures précédentes, l'ajout dans une composition de 2,5% de dioxyde de titane sous forme anatase ne provoque pas d'importantes variations de cette propriété. La dureté augmente de +10 à +20% maximum.

Malgré les duretés de film importantes, on n'observe pas de « cracking » après vieillissement accéléré (WOM) y compris sur la formule comprenant 100% de dioxyde de titane sous forme anatase.

### V. Influence sur la brillance

La brillance a été évaluée selon la norme iso 7668 à l'aide d'un 6rillancemètre RRAIVE LMG064.

**Tableau 5 : Influence des proportions de TiO₂ anatase sur la brillance**

| Brillance 250 µm L2B | Composition témoin | Composition 1 | Composition 2 | Composition 3 | Composition comparative 4 |
|---|---|---|---|---|---|
| 20° | 1,9 | 1,7 | 1,7 | 1,7 | 1,6 |
| 60° | 3,2 | 3,0 | 3,0 | 2,7 | 2,6 |
| 85° | 3,5 | 3,2 | 2,7 | 2,1 | 1,4 |

L'angle le plus discriminant est le plus rasant (85°). Le remplacement du dioxyde de titane rutile par du dioxyde de titane sous forme anatase provoque une perte de brillance caractéristique d'une surface relativement plus poreuse. Cependant, cette propriété est recherchée afin de présenter une surface de contact supérieure entre le TiO₂ anatase et les rayonnements UV.

### VI. Dégradation photocatalytique des peintures

Afin de mettre en évidence le phénomène recherché, une méthode de quantification du phénomène de farinage a été mise au point. Lorsqu'une peinture est trop exposée à l'air et aux agressions extérieures, le liant s'abîme et une sorte de poudre se forme à la surface. Un tel phénomène est appelé « farinage ». Cette méthode présente l'avantage de différencier les formulations selon leur photodégradation avant/après vieillissement accéléré dans le WOM.

Un scotch (GPI) de surface précise (5x5 cm) est pesé sur balance de précision puis est mis en contact intime avec la surface du film de peinture 1 minute. A l'issue de cette durée, il est retiré et pesé à nouveau. Le liant dégradé adhèrera directement sur le film de scotch.

Le tableau ci-contre rassemble les mesures après vieillissement climatique accéléré dans le WOM (5j selon le cycle classique).

**Tableau 6 : Influence des proportions de TiO₂ anatase sur la photodégradation**

| Farinage après 5j WOM | Composition témoin | Composition 1 | Composition 2 | Composition 3 | Composition comparative 4 |
|---|---|---|---|---|---|
| Masse sur scotch (g) | 00007 | 0,0011 | 00016 | 0.0024 | 0,0044 |
| % par rapport à la composition témoin | 0 | +60% | +130% | +250% | +500% |

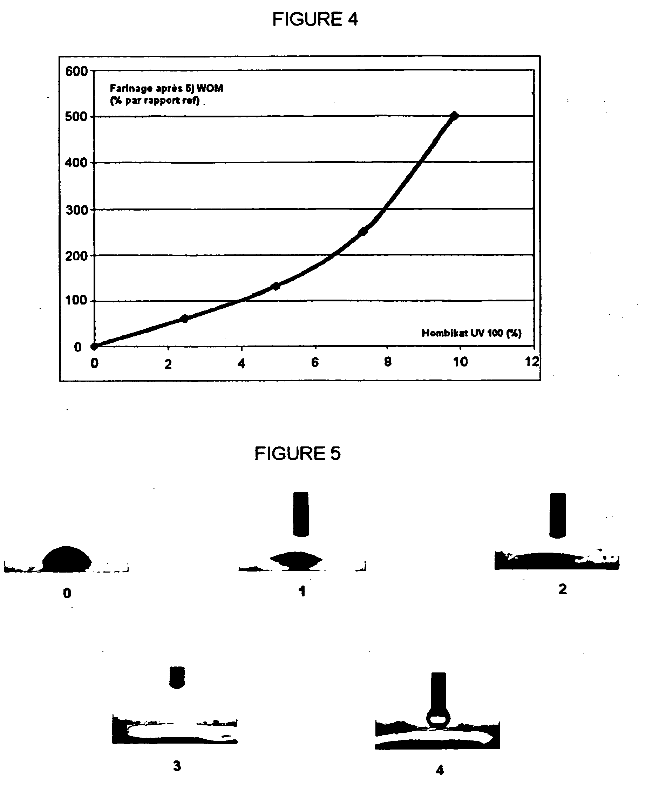

La photodégradation du liant est observée pour une composition comprenant 2,5% de dioxyde de titane sous forme anatase. La figure 4 représente le pourcentage de liant dégradé par rapport à la composition témoin en fonction des proportions de dioxyde de titane sous forme anatase. Le phénomène varie selon une loi quasi exponentielle avec la quantité de TiO₂ anatase.

Un autre essai a été réalisé dans le WOM, mais selon un cycle ne comportant que le rayonnement de la lampe sans pluie ni chaleur humide. Aucune différence n'a été observée entre les différentes formules. Ceci met en évidence que le phénomène de photocatalyse nécessite non seulement du TiO₂ anatase et un rayonnement UV, mais aussi la présence d'eau et d'O₂ en contact direct avec le catalyseur.

### VII. Impact sur la tension de surface

Afin de quantifier le phénomène de super-hydrophilie d'un film obtenu à partir de la composition, la mesure de l'angle de la goutte de contact a été adaptée. L'essai a consisté à appliquer une goutte d'eau à l'aide du tensiomètre « Mobile Drop » de la Société Kruss, puis de mesurer l'angle de contact entre la goutte et le support à l'aide du logiciel dédié DSA2 de la société Kruss avant et après vieillissement climatique accéléré au WOM. Avant vieillissement, l'angle des gouttes est identique et égal à 72°.

**Tableau 7 : Influence des proportions de TiO₂ sur l'hydrophilie**

| Après 5j WOM | Composition témoin 0 | Composition 1 | Composition 2 | Composition 3 | Composition comparative 4 |
|---|---|---|---|---|---|
| Angle de contact (°) | 69,1 | 31,4 | 29,6 | 0 | 0 |

La figure 5 représente les photographies des différents supports comprenant des films de compositions 0 à 4 après vieillissement climatique accéléré au WOM.

On voit clairement la modification de l'état de surface du film. En effet, plus l'angle de la goutte diminue, plus l'eau (de tension superficielle très élevée : 72 mN/m) a tendance à mouiller le support. La tension superficielle de l'eau ne variant pas, c'est obligatoirement celle du support qui augmente. La surface du film tend à moins freiner l'étalement de la goutte d'eau.

### VIII. Conclusion

Les essais ont montré que la composition de marquage routier présente une viscosité optimale pour des proportions en TiO₂ anatase en poids par rapport au poids total de la composition, inférieures à 6 %, au mieux inférieures à 5 %. Ces essais ont également montré que la composition présente un bon pouvoir couvrant même en couche mince pour des proportions en TiO₂ anatase inférieures ou égales à 5 % ainsi qu'un excellent pouvoir couvrant pour des proportions en TiO₂ anatase de 2,5%. Enfin, le phénomène de photodégradation du liant et d'hyperhydrophilie est observé pour une composition comprenant 2,5% de dioxyde de titane sous forme anatase.

Un compromis entre ces différentes propriétés conduit à la formule suivante:

| | |
|---|---|
| Liant acrylique : 35,16 % | Epaississant : 0,02 % |
| TiO₂ anatase : 3,94 % | Surfactant : 0,12 % |
| TiO₂ rutile : 10,79 % | Dispersant : 0,52 % |
| Charges : 40,37 % | Eau : 2,53 % |
| Coalescent : 2,08 % | Ethanol : 4,16 % |
| Antimousse : 0,31 % | |

## Revendications

1. Composition de marquage routier comprenant en poids par rapport au poids total de la composition :
- 10 à 40 % d'un liant de base organique comprenant une résine choisie parmi les homopolymères ou copolymères obtenus à partir de monomères vinyliques, acryliques ou méthacryliques, les résines naturelles ou synthétiques solubles dans l'alcool ou dans les huiles éventuellement modifiées, notamment les résines de dérivés végétaux, les cellulosiques, les résines de pétrole et les résines de coumarone-indène, les polyurées, les polyesters et polyéthers, les résines aminoplastes (aminées), les phénoplastes (phénoliques), et ester-époxydique, à l'exception des résines alkydes,
- 10 à 40 % de pigments, et
- au moins 20 % de charges,
**caractérisée en ce que** 1 à 100 % de la teneur totale en pigment est du dioxyde de titane cristallisé sous forme anatase.

2. Composition de marquage routier selon la revendication 1 **caractérisée en ce que** le dioxyde de titane anatase représente en poids, par rapport au poids total de pigment, 2 à 75%.

3. Composition de marquage routier selon la revendication 1 ou 2 **caractérisée en ce que** ladite composition comprend un mélange de dioxyde de titane cristallisé sous forme anatase et de dioxyde de titane cristallisé sous forme rutile.

4. Composition de marquage routier selon la revendication 3 **caractérisée en ce que** les proportions en poids de dioxyde de titane cristallisé sous forme rutile par rapport au poids total de la composition sont comprises entre 5 et 22%.

5. Composition de marquage routier selon l'une quelconque des revendications précédentes **caractérisée en ce que** le liant de base organique est en phase aqueuse.

6. Composition de marquage routier selon la revendication 5 **caractérisée en ce que** le liant de base organique est une émulsion d'au moins un polymère acrylique.

7. Composition de marquage routier selon l'une quelconque des revendications 1 à 4 **caractérisée en ce que** le liant de base organique se trouve dans une phase solvant organique.

8. Composition de marquage routier selon l'une quelconque des revendications précédentes **caractérisée en ce qu'**elle comprend en poids par rapport au poids total de la composition :
- 30 à 40 % de liant de base organique,
- 10 à 20 % de pigments,
- 35 à 45 % de charges.

9. Composition de marquage routier selon l'une quelconque des revendications précédentes **caractérisée en ce que** le taux de charge total en poids par rapport au poids total de la composition est supérieur ou égale à 50%.

10. Composition de marquage routier selon l'une quelconque des revendications précédentes **caractérisée en ce que** le taux de charge total en poids par rapport au poids total de la composition est compris entre 50% et 60%.

11. Composition de marquage routier selon l'une quelconque des revendications précédentes **caractérisée en ce que** la teneur en solide, en poids par rapport au poids total de la composition est supérieure à 60%.

12. Composition de marquage routier selon l'une quelconque des revendications précédentes **caractérisée en ce que** la teneur en solide, en poids par rapport au poids total de la composition est comprise entre 70 et 80 %.

13. Produit de marquage routier comprenant :
a) une composition selon l'une quelconque des revendications 1 à 13,
b) des microbilles et/ou des matériaux antidérapants.

14. Utilisation de dioxyde de titane sous forme anatase dans une composition de marquage routier ou un produit de marquage routier comprenant un liant de nature organique pour conférer à la composition ou au produit des propriétés de surface hyperhydrophiles et renouvelables.

## Claims

1. A road marking composition comprising by weight, based on the composition total weight:
- from 10 to 40% of an organic base binder comprising a resin selected from homopolymers or copolymers derived from vinylic, acrylic or methacrylic monomers, natural or synthetic resins that are soluble in alcohol or in optionally modified oils, especially plant derivative resins, cellulose resins, petroleum resins and coumarone-indene resins, polyureas, polyesters and polyethers, aminoplast resins (amino resins), phenoplasts (phenolic resins), and epoxy type esters, except alkyd resins,
- from 10 to 40% of pigments, and
- at least 20 % of fillers,
wherein from 1 to 100% of the pigment total content is crystallized titanium dioxide in the anatase form.

2. A road marking composition according to claim 1, wherein anatase type titanium dioxide represents by weight, based on the pigment total weight, from 2 to 75%.

3. A road marking composition according to claim 1 or 2, wherein it comprises a mixture of crystallized titanium dioxide in the anatase form and of crystallized titanium dioxide in the rutile form.

4. A road marking composition according to claim 3, wherein the amounts by weight of crystallized titanium dioxide in the rutile form based on the composition total weight range from 5 to 22%.

5. A road marking composition according to any one of the preceding claims, wherein the organic base binder is in a water phase.

6. A road marking composition according to claim 5, wherein the organic base binder is an emulsion comprising at least one acrylic polymer.

7. A road marking composition according to any one of claims 1 to 4, wherein the organic base binder is in an organic solvent phase.

8. A road marking composition according to any one of the preceding claims, wherein it comprises by weight, based on the composition total weight:
- from 30 to 40% of an organic base binder,
- from 10 to 20% of pigments,
- from 35 to 45% of fillers.

9. A road marking composition according to any one of the preceding claims, wherein the filler total amount by weight, based on the composition total weight is higher than or equal to 50%,

10. A road marking composition according to any one of the preceding claims, wherein the filler total amount by weight, based on the composition total ranges from 50% to 60%.

11. A road marking composition according to any one of the preceding claims, wherein the solid matter content, by weight, based on the composition total weight is higher than 60%.

12. A road marking composition according to any one of the preceding claims, wherein the solid matter content, by weight, based on the composition total weight ranges from 70 to 80%.

13. A road marking product comprising:
a) a composition according to any one of claims 1 to 13,
b) microbeads and/or anti-skid maternal.

14. Use of anatase type titanium dioxide in a road marking composition or a road marking product comprising an organic type binder to provide the composition or the product with hyperhydrophilic and renewable surface properties.

## Patentansprüche

1. Straßenmarkierungszusammensetzung, die bezogen auf das Gesamtgewicht der Zusammensetzung die folgenden Gewichtsanteile umfasst:
- 10 bis 40 % eines Bindemittels auf organischer Basis, das ein Harz umfasst, welches aus den Homopolymeren oder Copolymeren, die ausgehend von Vinyl-, Acryl- oder Methacrylmonomeren erhalten werden, den natürlichen oder synthetischen Harzen, die in Alkohol oder in möglicherweise modifizierten Ölen löslich sind, insbesondere den Harzen pflanzlicher Derivate, den Celluloseharzen, den Mineralölharzen, den Cumaron-Inden-Harzen, den Polyharnstoffen, den Polyestern und Polyethern, den Aminoplasten (Aminoharzen), den Phenoplasten (Phenolharzen) und Ester-Epoxy-Stoffen, mit Ausnahme der Alkydharze, ausgewählt ist,
- 10 bis 40 % an Pigmenten, und
- mindestens 20 % an Füllstoffen,
**dadurch gekennzeichnet, dass** Titandioxid, welches in Anatasform kristallisiert ist, 1 bis 100 % des Gesamtpigmentgehalts ausmacht.

2. Straßenmarkierungszusammensetzung nach Anspruch 1, **dadurch gekennzeichnet, dass** das Anatas-Titandioxid, bezogen auf das Gesamtpigmentgewicht, einen Gewichtsanteil von 2 bis 75 % ausmacht.

3. Straßenmarkierungszusammensetzung nach Anspruch 1 oder 2, **dadurch gekennzeichnet, dass** die Zusammensetzung eine Mischung aus Titandioxid, das in Anatasform kristallisiert ist, und aus Titandioxid, das in Rutilform kristallisiert ist, umfasst.

4. Straßenmarkierungszusammensetzung nach Anspruch 3, **dadurch gekennzeichnet, dass** die Gewichtsanteile an Titandioxid, das in Rutilform kristallisiert ist, im Bereich von 5 bis 22 %, bezogen auf das Gesamtgewicht der Zusammensetzung, liegen.

5. Straßenmarkierungszusammensetzung nach einem der vorhergehenden Ansprüche, **dadurch gekennzeichnet, dass** das Bindemittel auf organischer Basis in wässriger Phase vorliegt.

6. Straßenmarkierungszusammensetzung nach Anspruch 5, **dadurch gekennzeichnet, dass** das Bindemittel auf organischer Basis eine Emulsion mindestens eines Acrylpolymers ist.

7. Straßenmarkierungszusammensetzung nach einem der Ansprüche 1 bis 4, **dadurch gekennzeichnet, dass** das Bindemittel auf organischer Basis in einer organischen Lösemittelphase vorliegt.

8. Straßenmarkierungszusammensetzung nach einem der vorhergehenden Ansprüche, **dadurch gekennzeichnet, dass** sie die folgenden Gewichtsanteile umfasst, bezogen auf das Gesamtgewicht der Zusammensetzung :
- 30 bis 40 % an Bindemittel auf organischer Basis,
- 10 bis 20 % an Pigmenten,
- 35 bis 45 % an Füllstoffen.

9. Straßenmarkierungszusammensetzung nach einem der vorhergehenden Ansprüche, **dadurch gekennzeichnet, dass** der Füllstoffgewichtsanteil, bezogen auf das Gesamtgewicht der Zusammensetzung, insgesamt mindestens 50 % beträgt.

10. Straßenmarkierungszusammensetzung nach einem der vorhergehenden Ansprüche, **dadurch gekennzeichnet, dass** der Füllstoffgewichtsanteil, bezogen auf das Gesamtgewicht der Zusammensetzung, insgesamt im Bereich von 50 % bis 60 % liegt.

11. Straßenmarkierungszusammensetzung nach einem der vorhergehenden Ansprüche, **dadurch gekennzeichnet, dass** der Trockenmassegehalt, bezogen auf das Gesamtgewicht der Zusammensetzung, mehr als 60 % beträgt.

12. Straßenmarkierungszusammensetzung nach einem der vorhergehenden Ansprüche, **dadurch gekennzeichnet, dass** der Trockenmassegehalt, bezogen auf das Gesamtgewicht der Zusammensetzung, im Bereich von 70 bis 80 % liegt.

13. Straßenmarkierungsstoff, umfassend:
a) eine Zusammensetzung nach einem beliebigen der Ansprüche 1 bis 13,
b) Mikrokügelchen und/oder Antirutschmaterialien.

14. Verwendung von Titandioxid in Anatasform in einer Straßenmarkierungszusammensetzung oder einem Straßenmarkierungsstoff, die/der ein Bindemittel von organischer Beschaffenheit umfasst, um der Zusammensetzung oder dem Stoff hyperhydrophile und erneuerbare Oberflächeneigenschaften zu verleihen.
